# EUROPÄISCHE PATENTANMELDUNG

(11) **EP 0 818 305 A2**
(43) Veröffentlichungstag der Anmeldung: **14.01.1998**
(21) Anmeldenummer: 97890132.0
(22) Anmeldetag: 10.07.1997
(51) Int. Cl.: B32B 5/18, B32B 1/00

(54) **Verpackungsmaterial mit verbesserter Kantenstauchfestigkeit und Verfahren zu dessen Herstellung**

(30) Priorität: 11.07.1996 AT 1253/96
(71) Anmelder: Duropack Holding Aktiengesellschaft, 1235 Wien (AT)
(72) Erfinder: Kögler, Rolf Dieter, 91522 Ansbach (DE); Haschke, Heinz, Dr., 2542 Kottingbrunn (AT)
(74) Vertreter: Dungler, Karin

(57) **Zusammenfassung**

Es wird ein Verpackungsmaterial (1) bestehend aus mindestens zwei Materialbahnen 2 und 3 angegeben, welche unter Erhaltung ihrer Flexibilität in einer Dimensionsrichtung dadurch verstärkt sind, daß sie gewellt sind und daß sie in ihrem Zwischenraum eine ebenso gewellte Mittelschicht (4) aus geschäumtem Stärkematerial aufweisen. Dieses besteht überwiegend aus Stärke und natürlichen und/oder synthetischen Elastomeren.

## Beschreibung

Die Erfindung betrifft ein Verpackungsmaterial mit erhöhter Kantenstauchfestigkeit sowie ein Verfahren zu dessen Herstellung.

Ein wesentliches Qualitätsmerkmal für Verpackungsmaterialien ist deren Kantenstauchfestigkeit. Diese ist ein Maß dafür, wie hoch ein Verpackungsmaterial - beispielsweise Wellpappe - quer zu ihrer Fläche belastet werden kann, bis sie einknickt. In der praktischen Anwendung stellt die Kantenstauchfestigkeit ein Kriterium beispielsweise dafür dar, wie viele Behälter aus Wellpappe gefüllt mit Verpackungsgut in einem Lager übereinandergestapelt werden können, ohne unter dem Gewicht des Verpackungsgutes gequetscht zu werden oder einzuknicken.

Man ist daher insbesondere bei Wellpappe-Verpackungen dazu übergegangen, anstelle einfacher Wellpappe, das heißt dreibahniger/einwelliger Wellpappe höherwellige Wellpappe-Materialien, also beispielsweise fünfbahnige/zweiwellige oder auch dreiwellige wie sechsbahnige/dreiwellige Wellpappe-Materialien einzusetzen. Da jedoch auch mehrwellige Wellpappe in Wellenlängsrichtung eine wesentlich geringere Kantenstauchfestigkeit als in Wellenquerrichtung aufweist, wurde gemäß der US-A-4,128,677 eine mehrwellige Wellpappe nach dem Prinzip von Sperrholz vorgeschlagen. Dabei sind die einzelnen Wellenbahnen um einen gewissen Winkel, nämlich bis zu 90° gegeneinander verdreht. Für den dadurch gewonnenen Vorteil hinsichtlich höherer Kantenstauchfestigkeit sowohl in Wellenlängs- als auch in Wellenquerrichtung muß jedoch ein höherer Aufwand, insbesondere bei der Herstellung mehrwelliger Wellpappe in Kauf genommen werden.

Bei diesem bekannten Vefahren wird die erhöhte Kantenstauchfestigkeit durch rein mechanische Effekte erzeugt. Abgesehen davon ist es auch bekannt, die für die Herstellung von Wellpappe verwendeten Papierbahnen zu imprägnieren. Ein gängiges Verfahren ist die Mikro-Imprägnierung mit Wachs, wodurch nicht nur eine Erhöhung der Steifigkeitswerte des imprägnierten Papieres und damit der daraus hergestellten Wellpappe sondern auch eine Hydrophobierung und damit eine erhöhte Feuchtigkeitsbeständigkeit erzielt werden können. Allerdings kann es bei der Entsorgung dieser Wellpappe-Materialien, bedingt durch den Einsatz imprägnierter Papiere zu Recyclingproblemen kommen.

Ferner offenbart die WO-A1-93/18230 Verpackungssysteme, welche aus der Ebene der Verpackung herausragende Auswölbungen mit eckigem Querschnitt, beispielsweise in Form von Pyramidenstümpfen mit quadratischem Querschnitt, in regelmäßiger Anordnung aufweisen. Anstelle von Wellpappe wird aufgeschlossenes Altpapier als Verpackungsmaterial eingesetzt.

Derartige Verpackungssysteme zeigen zwar erhöhte Steifigkeitswerte in Längs- und Querrichtung der Verpackungsmaterialbahn; sie sind jedoch wesentlich sperriger als Wellpappe und lassen sich daher nicht so leicht rollen oder zu Netzen für Faltschachteln verarbeiten.

In der WO-A1-94/28063 werden Formteile aus Stärkeschaumstoff als umweltfreundliches Material für Einwegprodukte oder für das Verpackungsgut in seiner Form angepaßte Verpackungsschachteln vorgeschlagen.

Allerdings sind solche Produkte grundsätzlich an die Form des Verpackungsguts gebunden und keinesfalls so universell verwendbar wie Wellpappe.

Auch andere Naturrohstoffe wie Holz- oder Hanf fasern, welche mit Stärkeleim nach einem bestimmten Temperatur- und Zeitprofil zu Platten und Formteilen gepreßt worden sind, werden gemäß dieser Lehre als vollständig biologisch abbaubare Verbundwerkstoffe für die Herstellung von Platten, Formteilen und Profilen vorgeschlagen. Allerdings sind derartige Verbundwerkstoffe für die Herstellung sehr leichter und relativ dünner Verpackungsmaterialien wie Wellpappe mit demselben Tragfähigkeits/Gewichtsverhältnis ungeeignet, da sie zu steif und und in ihrer Form zu sehr fixiert sind.

Ebenso in Form und Steifigkeit fixiert sind die in der DE-A1-44 31 755 geoffenbarten Sandwichplatten aus Stärkeschaum. Gemäß dieser Lehre wird eine biologisch abbaubare und im Papierkreislauf recyclebare Sandwichplatte angegeben. Zu deren Herstellung wird Stärkeschaum in einem Extrusionsverfahren erzeugt und in situ zwischen Schichtmaterialien eingebracht. Dabei kann der Stärkeschaum in Form eines Bandes, stabförmiger oder sich schlangenförmig windender Stränge ausgebracht werden.

In einem weiteren Verfahrensschritt erfolgt die Verdichtung zu einer Sandwich-Platte.

Derartige Sandwich-Platten eignen sich zwar zur Aussteifung fertiger Verpackungsschachteln, wobei man diese auf die Schachtel-Innendimensionen zuschneidet und die Zuschnitte in die Schachtel an die Schachtelwände gelehnt einstellt; sie sind jedoch für die Herstellung von Faltschachteln ungeeignet, da sie sich - im Gegensatz zu Wellpappe - nur schwer zu Schachtelnetzen mit gestanzten Falzkanten verarbeiten lassen.

Schließlich werden gemäß der AT-PS-398 077 biologisch abbaubare Verpackungsmaterialien, insbesondere in Form loser Füllkörper sowie geschäumter Extrudate auf Basis von mindestens 50-60% Stärke und mindestens einer Komponente aus der Gruppe der thermoplastischen Elastomere wie Kautschuk oder Styrol-Butadien vorgeschlagen. Allerdings sind derartige Füllkörper als selbsttragendes Verpackungsmaterial zur Herstellung von Faltschachteln ungeeignet.

Ferner ist es bekannt, bei der Herstellung von Wellpappe die einzelnen Papierbahnen mittels Stärkekleister zu verbinden, wobei es sich meistens um mit Wasser angequollene, oft auch als "gelatiniert" bezeichnete, native Stärke handelt.

Derartige Produkte sind jedoch für die Ausbildung eines flexiblen Stärkeschaums ungeeignet, da das Material bei der Trocknung hart und bröselig wird.

Diesen Nachteil weist auch das gemäß der US-A-4,561,918 hergestellte Verpackungsmaterial auf. Dabei wird Stärkeschaum in die Höhlungen, das heißt in die sogenannten "flutes" zwischen Welle und Deckpapier in der Wellpappe eingebracht.

Auch diese Verpackungsmaterialien lassen sich nur schwer falzen, wobei sie leicht zerbrechen bzw. aufreißen, wenn man sie an den Kanten, welche mit üblichen Falzwerkzeugen vorgeprägt sind, zu knicken versucht.

Ähnliche Eigenschaften zeigen die gemäß der WO-A1-95/35202 geoffenbarte Sandwich-Materialien, welche gelatinierte Stärke aufweisen, die zwischen (Papier)-Bahnen extrudiert wird. Zu ihrer Verstärkung können diese Sandwich-Materialien mit herkömmlicher Wellpappe verklebt werden.

Schließlich werden gemäß der EP-A1-533 031 Stärke-Kombinationen als Füllmaterial für die Höhlungen ("flutes") von Wellpappe zu deren Verstärkung beschrieben, wobei Gemische von Rohstärke mit löslicher Stärke in Form von Zubereitungen bestehend aus sprühgetrockneter, nicht granulierter Stärke, sprühgetrockneter gelatinierter Stärke und aus voll dispergierter, extrudierter Stärke eingesetzt werden. Diese Mischungen werden an den Enden ("tips") der Wellpappe-Höhlungen ("flutes") appliziert.

Aufgabe der Erfindung ist es nun, die aus dem Stand der Technik vorbekannten Nachteile von Verpackungsmaterialien zu vermeiden, wobei ein Wellpappe-ähnliches Verpackungsmaterial bereitgestellt werden soll, welches die für Wellpappe übliche Dicke, jedoch eine gegenüber Wellpappe erhöhte Kantenstauchfestigkeit aufweist. Dieses Verpackungsmaterial soll ferner flächig, aber dennoch leicht zu Schachtelnetzen falz- und faltbar sein. Es soll ebenso problemlos recyclebar bzw. auch vollständig biologisch abbaubar (kompostierbar) sein.

Erfindungsgemäß wird ein Verpackungsmaterial bestehend aus mindestens zwei Materialbahnen vorgeschlagen, welche unter Erhaltung ihrer Flexibilität in einer Dimensionsrichtung dadurch verstärkt sind, daß sie gewellt sind und daß zwischen den Materialbahnen eine ebenso gewellte Mittelschicht aus geschäumtem Stärkematerial bestehend überwiegend aus Stärke und natürlichen und/oder synthetischen Elastomeren angebracht ist.

Vorzugsweise besteht das geschäumte Stärkematerial der Mittelschicht überwiegend aus thermoplastischer Stärke. Unter thermoplastischer Stärke versteht man mit Wasser thermisch unter Scherbelastung vorbehandelte Stärke, welche besonders gut extrudierbar ist.

Der Anteil an Elastomeren im aufgeschäumten Stärkematerial soll max. 40 Gew-% betragen. Vorzugsweise liegt der Elastomer-Anteil zwischen 10 und 30 Gew.%.

Als Materialbahnen dienen vorzugsweise Kraftliner-Materialien, Papier sowie übliche Verpackungsfilme.

Erfindungsgemäß wird ferner ein Verfahren zur Herstellung des eingangs genannten Verpackungsmaterials vorgeschlagen, welches dadurch gekennzeichnet ist, daß a) mindestens zwei vorzugsweise durch Riffelwalzenpaare vorgewellte Materialbahnen einem beheizten Riffelwalzenpaar zugeführt werden, zwischen welchen b) eine Schicht aus aufschäumbarem Stärkematerial bestehend überwiegend aus Stärke und natürlichen und/oder synthetischen Elastomeren mit bestimmtem Wassergehalt extrudiert wird, wobei c) Temperatur, Wassergehalt und Beschaffenheit der aufschäumbaren Stärkematerialschicht sowie die Temperatur und Laufgeschwindigkeit der Riffelwalzen so eingestellt werden, daß das aufschäumbare Stärkematerial beim Austritt aus den Riffelwalzen aufschäumt und ein wellenförmiger Verbund bestehend aus der geschäumten Stärkematerialschicht mit den beidseitig angebrachten Materialbahnen gebildet wird, in welchem das geschäumte Stärkematerial in den Wellenbäuchen angereichert und in den Wellentälern in geringem Ausmaß vorliegt und daß gegebenenfalls d) in einem weiteren Verfahrensschritt der gemäß c) gebildete Verbund ein- und/oder beidseitig mit Papier- und/oder Kraftlinerbahnen verklebt und in an sich bekannnter Weise zu ein- oder mehrwelligen Wellpappe-Verpackungsmaterialien verarbeitet wird.

Als aufschäumbares Stärkematerial werden vorzugsweise Stärke/Wasser-Gemische, insbesondere thermoplastische Stärke/Wasser-Gemische eingesetzt werden. Der Anteil an natürlichen und/oder synthetischen Elastomeren beträgt bis zu 40 Gew.%, vorzugsweise 10 bis 30 Gew.%. Als natürliches Elastomer wird bevorzugt Naturkautschuk oder dessen Latex eingesetzt. Als synthetisches Elastomer wird Styrol-Butadien-Kautschuk oder dessen Latex eingesetzt. Der Wassergehalt des aufschäumbaren Stärkematerials muß so eingestellt werden, daß er beim Verlassen der Extruderdüse im Bereich von 10 bis 30 Gew%, vorzugsweise im Bereich von 15 - 25 Gew%, liegt.

Bevorzugt wird das aufschäumbare Stärkematerial zwischen zwei Kraftliner-Bahnen extrudiert, wobei aber auch andere Trägerfolien oder -Vliese als Grund- bzw. als Deckschicht für die Herstellung des erfindungsgemäßen Verpackungsmaterials infragekommen.

Ein weiterer Vorteil der Erfindung ist, daß aufgrund der verstärkenden Wirkung der geschäumten Stärkematerialschicht dünnere Trägerlagen (Trägerpapiere) verwendet werden können, als bei der Herstellung herkömmlicher Wellpappe. Wird beispielsweise für herkömmliche, dreilagige/einwellige Wellpappe ein Kraftliner mit einem Flächengewicht von 250 g/m² verwendet, so erzielt man wesentlich bessere Stabilitäten, wenn statt dessen gemäß dem erfindungsgemäßen Verfahren das aufschäumbare Stärkematerial zwischen zwei Kraftlinerbahnen mit einem Flächengewicht von je 125 g/m² oder noch geringerem Flächengewicht extrudiert wird.

Besonders bevorzugt ist die Verwendung von Kraftliner-Bahnen mit einem Flächengewicht im Bereich von 80-150 g/m², insbesondere von 100 - 125 g/m².

Die Schichtdicke des aufschäumbaren Stärkematerials, welches zwischen zwei Materialbahnen extrudiert wird, soll so eingestellt werden, daß nach dem Aufschäumen gerade die gewünschte Wellenstärke entsteht.

Dabei ist mit einem Aufschäumverhältnis - das ist das Verhältnis der Schichtdicke des ungeschäumten, aufschäumbaren Stärkeextrudats zur Dicke desselben nach Aufschäumung - von 1:3 bis 1:7 zu rechnen.

Die Maximaltemperatur am Austritt der Extruderdüse muß 130°C, vorzugsweise 110°C betragen, damit kein vorzeitiges Aufschäumen vor Eintritt in den Spalt des Riffelwalzenpaares stattfindet. Andererseits muß diese Temperatur aber zumindestens so hoch sein, daß zusammen mit der weiteren Wärmezufuhr zwischen den beheizten Riffelwalzen die Aufschäumtemperatur erreicht wird. Dementsprechend sind in Vorversuchen folgende Verfahrensparameter festzulegen: a) Beschaffenheit des aufschäumbaren Stärkematerials, b) dessen Wassergehalt, c) Austrittstemperatur an der Extruderdüse, d) Riffelwalzentemperatur und e) Riffelwalzengeschwindigkeit. Dabei sind die Verfahrensparameter so aufeinander einzustellen, daß das gewünschte Aufschäumverhältnis entsteht.

Als besonders geeignet haben sich Riffelwalzentemperaturen um 180°C bei einer Riffelwalzengeschwindigkeit, welche eine Verweilzeit in der Riffelwalze von ca. 1 Sekunde ermöglichte, erwiesen. Da die Aufschäumbedingungen im wesentlichen davon abhängen, welche Wärmemenge pro Volumseinheit in die Extrudatbahn an der Riffelwalze eingebracht wird, können die genannten Verfahrensparameter leicht nach bekannten physikalischen Gesetzen aufeinander abgestimmt werden.

Die Erfindung soll anhand von Figuren und eines Ausführungsbeispiels näher erläutert werden:

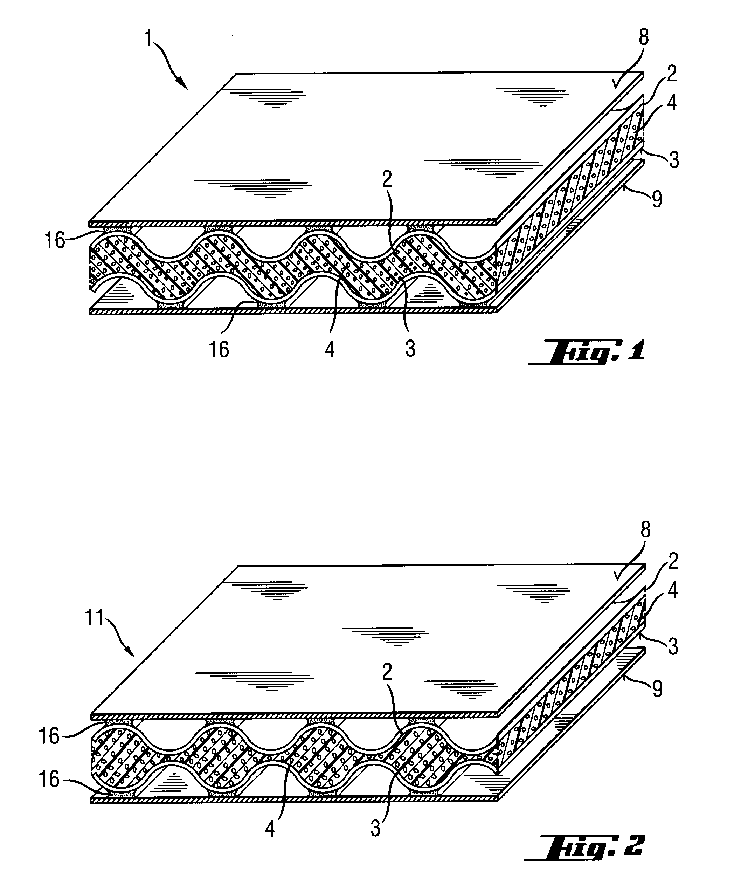

Fig. 1 zeigt das erfindungsgemäße Verpackungsmaterial 1, welches an seinen beiden Oberflächen die Kraftlinerbahnen 8, 9 aufweist. Zwischen diesen Kraftlinerbahnen befinden sich die gewellten Materialbahnen 2 und 3, welche als Mittelschicht die geschäumte Stärkemasse 4 aufweisen. Die gewellten Materialbahnen 2 und 3 können als Verbindungshilfe zu den Kraftlinerbahnen 8 und 9 gegebenenfalls eine Klebstoffschicht 16 aufweisen.

Gemäß Fig. 1 sind die Wellentäler und Wellenberge der Materialbahnen 2 und 3 sowie der Stärkematerialschicht 4 phasengleich.

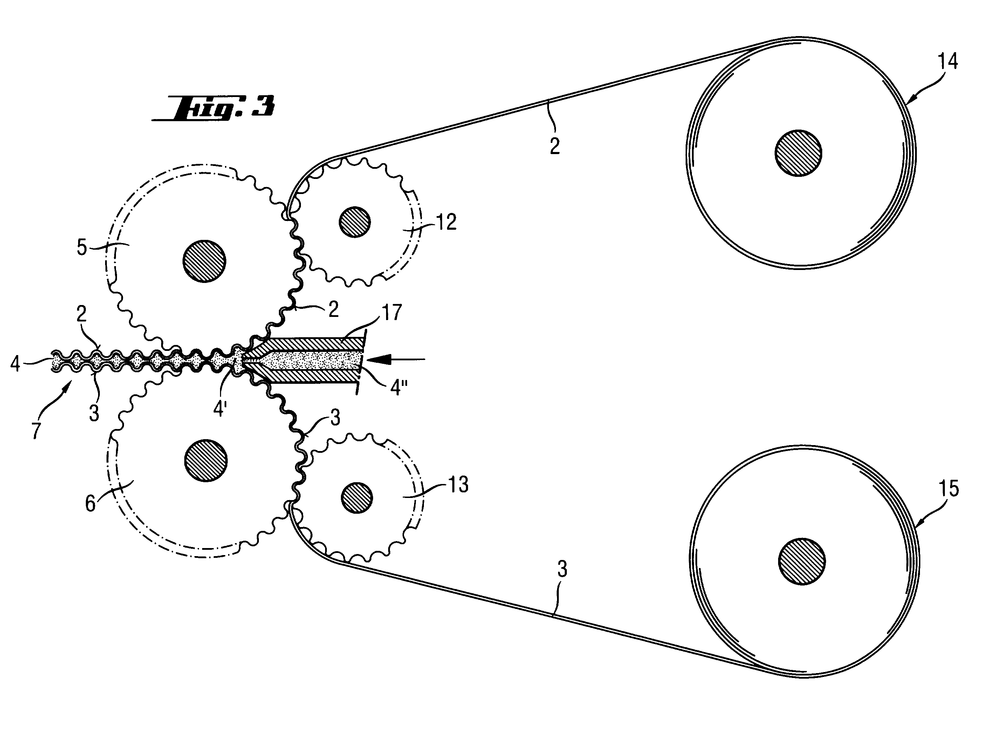

Fig. 2 zeigt das erfindungsgemäße Verpackungsmaterial in einer Darstellung, bel welcher die Wellenberge und Wellentäler der Materialbahnen 2 und 3 im Gegensatz zu den Wellenbergen und Wellentälern der Stärkematerialmittelschicht 4 phasenverschoben sind.

Fig. 3 zeigt eine Vorrichtung zur Durchführung des erfindungsgemäßen Verfahrens. Diese Vorrichtung weist die Vorratsrollen 14 und 15 für die Materialbahnen 2 und 3 sowie die beiden Riffelform-Gegenwalzen 12 und 13 für das Vorwellen der Materialbahnen 2 und 3 auf. Ferner zeigt die Vorrichtung die beheizten Riffelwalzen 5 und 6 sowie die für die Extrusion notwendige Breitschlitzdüse 17.

Das erfindungsgemäße Verpackungsmaterial wird beispielsweise wie folgt hergestellt:

Die Materialbahnen 2 und 3 werden von den Vorratsrollen 14 und 15 den Riffelform-Gegenwalzen 12 und 13 zugeführt, sodaß die Materialbahnen bereits vorgewellt die Oberfläche der beheizten Riffelwalzen 5 und 6 passieren. In der durch die Riffelwalzen 5 und 6 gebildeten Spalte wird eine Breitschlitzdüse 17 eines Extruders angebracht. In dieser Breitschlitzdüse befindet sich nunmehr eine aufschäumbare Stärkematerialzubereitung 4", bestehend aus 80 Gew.% Kartoffelstärke und 20 Gew.% bezogen auf den Feststoffgehalt einer Naturkautschuklatex mit einem Anfangs-Gesamtwassergehalt von 20,5 Gew.%. Die Temperatur am Austritt der Breitschlitzdüse beträgt etwa 124°C. Die Temperatur der Riffelwalzen beträgt beispielsweise 180°C. Die Stärkematerialmischung wird bei diesen Temperaturverhältnissen nunmehr zwischen die beiden vorgewählten Materialbahnen 2 und 3 eingebracht; die Schichtdicke dieser Materialmischung 4' beträgt vorzugsweise 0,3 mm. Durch die Parameter betreffend Riffelwalze wie beispielsweise deren Umlaufgeschwindigkeit von 6 m/min. erfolgt nunmehr das Aufschäumen dieser Schicht 4', und zwar beispielsweise in einem Verhältnis von 1:6, sodaß die Wellenbäuche der Materialbahnen 2 und 3 mit Stärkematerial gefüllt werden, wobei an den Wellentälern das Stärkematerial im wesentlichen verdrängt wird; dies bedingt durch den erzeugten Anpreßdruck der beiden Riffelwalzen 5 und 6.

Nach dem Verlassen der Riffelwalzen 5 und 6 wird ein Wellpappeähnlicher Verbund 7 erzeugt, welcher an seiner Oberfläche die gewellten Materialbahnen 2 und 3 und als seine Mittelschicht 4 die geschäumte Stärkematerialschicht aufweist. Dieser Wellpappe-ähnlicher Verbund 7 kann anschließend (nicht dargestellt) in einer herkömmlichen Wellpappe-Erzeugungsanlage über diverse Rollen geführt werden, sodaß die flexiblen Produkteigenschaften bewirkt werden.

Dieser wellenförmige Verbund wird anschließend in einer herkömmlichen Wellpappe-Erzeugungsanlage über diverse Rollen geführt, wodurch dessen flexible Produkteigenschaften erzeugt werden. Anschließend wird dieser flexible, wellenförmige Verbund beidseitig mit einem 250 g/m² Kraftliner zu einer dreibahnigen/einwelligen Wellpappe verarbeitet.

Während der Kantenstauchwiderstand (nach DIN 53149) bei gleich dicker herkömmlicher dreibahniger/einwelliger Wellpappe bei 5 - 10 kN/m liegt, beträgt der Kantenstauchwiderstand des erfindungsgemäßen, gemäß Beispiel hergestellten Verpackungsmaterials mindestens 28 kN/m.

Diese dreibahnige Wellpappe ist rollbar, sodaß daraus problemlos mit herkömmlichen Falz- und Stanzwerkzeugen Netze für Faltschachteln hergestellt werden können, welche Faltschachteln bei Bedarf durch Knickung an den Falzkanten problemlos zusammengestellt werden können.

Als reines Stärke-Papier/Naturlatex-Produkt ist das Material problemlos im Papier-Herstellungsprozeß recyclebar.

Im Kompostierungstest ist das Material zumindest genauso leicht und vollständig kompostierbar wie normales Kraftliner-Papier.

## Patentansprüche

1. Verpackungsmaterial (1) bestehend aus mindestens zwei Materialbahnen (2, 3), welche unter Erhaltung ihrer Flexibilität in einer Dimensionsrichtung dadurch verstärkt sind, daß sie gewellt sind und daß zwischen den Materialbahnen (2, 3) eine ebenso gewellte Mittelschicht (4) aus geschäumtem Stärkematerial bestehend überwiegend aus Stärke und natürlichen und/oder synthetischen Elastomeren angebracht ist.

2. Verpackungsmaterial nach Anspruch 1, dadurch gekennzeichnet, daß das geschäumte Stärkematerial der Mittelschicht (4) überwiegend aus thermoplastischer Stärke besteht.

3. Verpackungsmaterial nach Anspruch 1 oder 2, dadurch gekennzeichnet, daß der Anteil an Elastomeren max. 40 Gew.% beträgt.

4. Verpackungsmaterial nach Anspruch 3, dadurch gekennzeichnet, daß der Anteil an Elastomeren in einem Bereich zwischen 10 und 30 Gew.% liegt.

5. Verpackungsmaterial nach einem der Ansprüche 1 bis 4, dadurch gekennzeichnet, daß als Materialbahnen (2, 3) Kraftliner, Papier sowie übliche Verpackungsfilme dienen.

6. Verfahren zur Herstellung eines Verpackungsmaterials gemäß einem der Ansprüche 1 bis 5, dadurch gekennzeichnet, daß a) mindestens zwei, vorzugsweise durch Riffelformwalzenpaare (5, 12 und 6, 13) vorgewellte, Materialbahnen (2, 3) einem beheizten Riffelwalzenpaar (5, 6) zugeführt werden, zwischen welchen b) eine Schicht (4') aus aufschäumbarem Stärkematerial (4") bestehend überwiegend aus Stärke und natürlichen und/oder synthetischen Elastomeren mit bestimmtem Wassergehalt extrudiert wird, wobei c) Temperatur, Wassergehalt und Beschaffenheit der aufschäumbaren Stärkematerialschicht (4') sowie die Temperatur und Laufgeschwindigkeit der Riffelwalzen (5, 6) so eingestellt werden, daß das aufschäumbare Stärkematerial (4') beim Austritt aus den Riffelwalzen (5, 6) aufschäumt und ein wellenförmiger Verbund (7) bestehend aus der geschäumten Stärkeschicht (4) mit den beidseitig angebrachten Materialbahnen (2, 3) gebildet wird, in welchem das geschäumte Stärkematerial in den Wellenbäuchen angereichert und in den Wellentälern in geringem Ausmaß vorliegt und daß gegebenenfalls d) in einem weiteren Verfahrensschritt der gemäß c) gebildete Verbund ein- und/ oder beidseitig mit Papier- und/oder Kraftlinerbahnen (8, 9) verklebt und in an sich bekannnter Weise zu ein- oder mehrwelligen Wellpappe-Verpackungsmaterialien (11) verarbeitet wird.

7. Verfahren nach Anspruch 6 dadurch gekennzeichnet, daß als aufschäumbares Stärkematerial (4') Stärke/Wasser-Gemische, vorzugsweise thermoplastische Stärke/Wasser-Gemische verwendet werden.

8. Verfahren nach Anspruch 6 oder 7 dadurch gekennzeichnet, daß im aufschäumbaren Stärkematerial (4') bis zu 40 Gew% natürliche und/oder synthetische Elastomere bzw. deren Latices sowie Wasser eingesetzt werden.

9. Verfahren nach Anspruch 8 dadurch gekennzeichnet, daß der Anteil an natürlichen und/oder synthetischen Elastomeren bzw. deren Latices 10 bis 30 Gew.% beträgt.

10. Verfahren nach einem der Ansprüche 6 - 9 dadurch gekennzeichnet, daß als natürliches Elastomer Naturkautschuk oder dessen Latex eingesetzt wird.

11. Verfahren nach einem der Ansprüche 6 - 9 dadurch gekennzeichnet, daß als synthetisches Elastomer Styrol-Butadien-Kautschuk oder dessen Latex eingesetzt wird.

12. Verfahren nach einem der Ansprüche 6 bis 11 dadurch gekennzeichnet, daß der Wassergehalt des aufschäumbaren Stärkematerials (4') beim Verlassen der Extruderdüse (17) im Bereich von 10 bis 30 Gew%, vorzugsweise zwischen 15 und 25 Gew.% liegt.

13. Verfahren nach einem der Ansprüche 6 bis 12 dadurch gekennzeichnet, daß als Materialbahnen (2, 3), zwischen welche das aufschäumbare Stärkematerial (4') extrudiert wird, Kraftliner eingesetzt werden.

14. Verfahren nach Anspruch 13 dadurch gekennzeichnet, daß die Kraftlinerbahnen ein Flächengewicht 80 - 150 g/m², vorzugsweise von 100 - 125 g/m² aufweisen.

15. Verfahren nach einem der Ansprüche 6 bis 14 dadurch gekennzeichnet, daß das Verhältnis der Schichtdicke des ungeschäumten Stärkematerialextrudats zur Schichtdicke des geschäumten Stärkematerialextrudats im Bereich zwischen 1:3 bis 1:7 eingestellt wird.

16. Verfahren nach einem der Ansprüche 6 bis 15 dadurch gekennzeichnet, daß die Maximaltemperatur am Austritt der Extruderdüse (17) 130°C, vorzugsweise 110°C, beträgt.
